# EUROPÄISCHE PATENTANMELDUNG

(11) **EP 1 544 090 A2**
(43) Veröffentlichungstag der Anmeldung: **22.06.2005**
(21) Anmeldenummer: 04025955.8
(22) Anmeldetag: 02.11.2004
(51) Int. Cl.: B62D 65/14

(54) **Montage- und Abstimmbock und Verfahren zur Passgenauigkeitsprüfung einer Fahrzeug-Innenausstattung**

(30) Priorität: 19.12.2003 DE 10359983
(71) Anmelder: Misslbeck Technologies AG, 85055 Ingolstadt (DE)
(72) Erfinder: Misslbeck, Sepp, 85049 Ingolstadt (DE)
(74) Vertreter: Popp, Eugen, Dr.

(57) **Zusammenfassung**

Montage- und Abstimmbock (29) zur Passgenauigkeitsprüfung einer Fahrzeug-Innenausstattung, insbesondere einer Pkw-Innenausstattung, mit einer Mehrzahl steifer Rahmenteile (3,31,33,41), die fest oder lösbar miteinander verbunden und zur Anbringung von verschiedenen Innenausstattungsteilen eines Fahrzeuges an der Innenseite einer Rahmenkonstruktion ausgebildet sind, wobei die Rahmenkonstruktion zur Anbringung einer im wesentlichen vollständigen Innenausstattung ausgebildet und durch Vorsehen lösbarer Befestigungen (37) zwischen Komponenten der Rahmenkonstruktion derart modular ausgeführt ist, dass jeweils ein Modul dem Innenausstattungs-Lieferumfang eines Zulieferers zugeordnet ist und diese Module als jeweils in sich steife Einheiten (3,31,33,41) aus der Rahmenkonstruktion herauslösbar sind.

## Beschreibung

Die Erfindung betrifft einen Montage- und Abstimmbock nach dem Oberbegriff des Anspruchs 1 sowie ein Verfahren zur Vormontage einer Innenausstattung eines Fahrzeuges nach dem Oberbegriff des Anspruchs 9.

Seit je her wird die Montage eines komplexeren Landfahrzeuges, insbesondere eines Automobils, unter Zuhilfenahme von Montageböcken bzw. -rahmen durchgeführt. Dies gilt sowohl für manuelle als auch für robotergestützte Montagevorgänge und nicht nur für die Serienproduktion, sondern natürlich auch für dieser vorgelagerte Montageprozesse, die nicht der Herstellung eines verkaufsfähigen Produktes, sondern der Ermittlung der Passfähigkeit und systembezogenen Funktionsfähigkeit der einzelnen Fahrzeugkomponenten dienen.

Mit der Erhöhung des Automatisierungsgrades der Fahrzeugmontage und steigenden Qualitätsansprüchen, insbesondere im Hinblick auf die funktionsbezogene und "optische" Passfähigkeit der Fahrzeugkomponenten, wurden diese Montageböcke zunehmend mit einer Vielzahl von präzise positionierten und teils verstellbaren Aufnahme- und Messmitteln ausgestattet, so dass daraus hochgradig komplexe Strukturen wurden. Neuere Konstruktionen dieser Art, die der Montage einer Kfz-Karosserie und/oder von Funktions- bzw. Ausstattungskomponenten eines Kfz dienen, sind beispielsweise aus der US 4,875,273 oder der EP 0 675 035 B1 bekannt. Die DE 198 36 016 A1 beschreibt eine Vorrichtung zur Nachbildung zumindest eines Teilbereichs einer Fahrzeugkarosserie, die aus einer Vielzahl von individuell gefertigten Referenzteilen mit hoher Maßgenauigkeit besteht, welche separat gegen Musterteile oder serienfallende Teile ausgetauscht werden können, um jeweils die Passfähigkeit beurteilen zu können.

Seit geraumer Zeit kommen auch zur Beurteilung der Passfähigkeit von Teilen der Innenausstattung eines Pkw entsprechende Montage- bzw. Abstimmböcke zum Einsatz. So sind in der DE 40 05 884 C2 oder US 5,688,022 entsprechende Montage- und Abstimmrahmen für einen Pkw-Dachhimmel beschrieben.

Auch aus der EP 0 170 086 B1 ist eine Vorrichtung zum Einbau eines Dachhimmels in ein Kraftfahrzeug bekannt, die ein entsprechend vormontiertes Montagegestell umfasst. Hier ist bereits vorgesehen, dass außer dem Dachhimmel auch die anderen innen am Dach zu befestigenden Teile, entsprechend ihrer späteren Endmontageposition, vormontierbar sind. Weiter ist beschrieben, dass das Montagegestell hakenartige bewegliche Halteelemente hat, die als Zentriervorrichtung bezüglich der Karosserie dienen. Dieser Montage- bzw. Abstimmbock ist also bereits nicht allein auf eine einzelne Ausstattungskomponente zugeschnitten, sondern universeller einsetzbar.

Die DE 43 11 647 C2 beschreibt eine komplexere Rahmenkonstruktion (ein "Cubing"), an deren Innenseite verschiedene Ausstattungsteile angebaut werden können. Die das sogenannte "Innencubing" bildenden steifen Rahmenteile umfassen solche, die eine Fahrzeugtür nachbilden, solche zur Aufnahme der Instrumententafel, solche zur Nachbildung einer Bodengruppe etc. Die verschiedenen Rahmen sind teils unmittelbar mit einer Grundspannplatte verbunden und teils gegenüber dem Grundaufbau verschieblich und/oder drehbar angebracht.

Mit den immer weiter steigenden Ansprüchen an das funktionelle und optische Harmonieren der einzelnen Komponenten und Abschnitte einer Kfz-Innenausstattung und den entsprechend gesteigerten Vorgaben an die Zulieferer erhöhen sich auch die Ansprüche an die Leistungsfähigkeit und Universalität eines derartigen Innencubing sowie an eine effiziente Handhabung der erforderlichen Abstimmungsprozeduren. Der Erfindung liegt daher die Aufgabe der Bereitstellung eines im Hinblick auf die Abstimmung der Komponenten verschiedener Zulieferer verbesserten Montage- und Abstimmbockes der gattungsgemäßen Art sowie eines verbesserten Verfahrens der gattungsgemäßen Art, welches insbesondere ein qualitativ wesentlich verbessertes Abstimmungsergebnis liefert, zugrunde.

Diese Aufgabe wird in ihrem Vorrichtungsaspekt durch einen Montage- und Abstimmbock mit den Merkmalen des Anspruchs 1 und in ihrem Verfahrensaspekt durch ein Verfahren mit den Merkmalen des Anspruchs 9 gelöst. Zweckmäßige Fortbildungen des Erfindungsgedankens sind Gegenstand der abhängigen Ansprüche.

Die Erfindung schließt den wesentlichen Gedanken ein, dem Finalproduzenten eines Fahrzeuges (speziell Pkw) einen Montage- und Abstimmbock als im wesentlichen vollständiges Innencubing zur Anbringung der gesamten Fahrzeug-Innenausstattung bereitzustellen, doch zugleich dafür Sorge zu tragen, dass Zulieferer mit originalen Teilen dieses Innencubing eine verlässliche Prüfung ihrer Zulieferteile vornehmen können. Hiernach schließt die Erfindung weiter den Gedanken ein, die Rahmenkonstruktion des Montage- und Abstimmbocks durch Vorsehen lösbarer Befestigungen zwischen einzelnen Komponenten derart modular auszuführen, dass sie mit hoher Maßhaltigkeit demontierbar und bei Bedarf auch wieder zusammensetzbar ist. Hierbei sollen die Komponenten bzw. Module der Rahmenkonstruktion derart bestimmt werden, dass jeweils eines (oder ggf. auch mehrere) auf den Innenausstattungs-Lieferumfang eines Zulieferers abgestimmt ist/sind.

Erfindungsgemäß ist überdies vorgesehen, dass die Module jeweils in sich steife bzw. starre Einheiten sind, bei deren Transport und aus der Gesamtkonstruktion herausgelöster Verwendung keinerlei Deformationen und Maßabweichungen zu befürchten sind, die letztlich zu Passungenauigkeiten innerhalb einer Gesamt-Innenausstattung führen könnten, deren Einzelteile an herausgelösten Modulen geprüft worden waren.

Unter Verfahrens-Gesichtspunkten ist hervorhebenswert, dass das vorgeschlagene Innencubing die Vormontage im wesentlichen sämtlicher Komponenten der Innenausstattung ermöglicht, wozu eine in einem einheitlichen Konstruktionsvorgang gebildete zusammenhängende Rahmenkonstruktion mit modularem Aufbau (nach obigem bevorzugt entsprechend dem Lieferumfang der einzelnen Zulieferer) bereitgestellt wird. Weiter gehört zur Erfindung in diesem Sinne die separate Bereitstellung der Einzelmodule im gleichen Konstruktionsvorgang. Zur Vormontage der Fahrzeug-Innenausstattung werden dann erfindungsgemäß die Komponenten der einzelnen Zulieferer jeweils an den separaten Modulen vormontiert, wobei aufgrund des integralen Konstruktionsvorganges des Gesamt-Innencubing in optimaler Weise Sorge für die Passfähigkeit an den "Schnittstellen" getragen ist. Schließlich gehört zum erfindungsgemäßen Verfahren, dass im Bedarfsfall die gesamte Innenausstattung an der zusammenhängenden Rahmenkonstruktion vormontiert wird, um sie im Zusammenhang aller Einzelteile einer messtechnischen und/oder visuellen Beurteilung zu unterziehen.

Mit der Erfindung wird also eine Vereinigung von dimensionalen Einzelprüfelementen und Beurteilung der Passgenauigkeit zu den jeweils angrenzenden Innenausstattungsteilen in einem einzigen Abstimmbock vorgenommen, und dies bietet im Fahrzeug-Produktionsprozess eine Reihe wesentlicher Vorteile:

Zunächst ist eine Überprüfung der Teilequalität der Innenausstattung in Bezug auf Kollisionen, Spalte, Textur-Passfähigkeit etc. zu einem früheren Zeitpunkt als bisher möglich. Zudem bietet die vorgeschlagene Lösung zusätzliche Abstimmmöglichkeiten für Zulieferer und Finalproduzent, und es kommen nur bereits vorabgestimmte Teile in die Montage bzw. in das vollständige Innencubing ("Prüfcubing"), wodurch sich deutlich der Qualitätsstand zum jeweiligen Prüfzeitpunkt verbessert. Diese Vorteile gelten grundsätzlich sowohl bei der erstmaligen Erstellung bzw. Vormontage einer Innenausstattung, als auch bei Änderungen im Zuge von Modellpflegemaßnahmen o.ä. Beim Serienanlauf ermöglichen sie insbesondere eine steilere Serienanlaufkurve als bisher. Die Zahl der sogenannten Änderungsschleifen verringert sich mit Einführung der Erfindung in den Produktionsprozess.

Aus Sicht des Zulieferers (Systemlieferanten) ergibt sich der wesentliche Vorteil, dass ein vollgültiges Prüfmittel im eigenen Hause vorhanden ist und sein Lieferumfang einen hohen Perfektionsgrad zu einem frühen Zeitpunkt erreichen kann. Hieraus ergeben sich auch handfeste finanzielle Vorteile: Je früher sich die Teile des Zulieferers im Zusammenbau bewähren, desto früher kann er auch die von ihm produzierten Teile dem Finalproduzenten (OEM) in Rechnung stellen.

Von besonderer Bedeutung sind im Kontext der Erfindung ein Cockpit-Modul zur Prüfungs-Montage von Armaturentafel und Mittelkonsole etc., ein Türverkleidungs-Modul zur Montage der Türinnenverkleidung und ein Dachhimmel-Modul zur Montage des Dachhimmels sowie zugehöriger Elemente in ihrer durch die integrale Konstruktion des Montage- und Abstimmbockes gesicherten räumlichen Zuordnung zueinander, um speziell die Spalte und die visuell wahrgenommene Passfähigkeit zwischen diesen Teilen bzw. Abschnitten einer Fahrzeug-Innenausstattung prüfen zu können. Es handelt sich hierbei ja um die vom Fahrer und den weiteren Insassen am bewusstesten wahrgenommenen Bereiche, bei denen also auch ungleichmäßige Spalte bzw. ein unbefriedigendes Zusammenpassen der Teile in der visuellen Wahrnehmung besonders schwerwiegende Auswirkungen haben.

Von erheblicher (wenn auch nicht an die vorgenannten Module heranreichender) Bedeutung sind in diesem Zusammenhang ggf. ein separierbares Säulenverkleidungs-Modul zur Anbringung der Säulenverkleidung(en) sowie ein Gepäckraum-Modul zur Prüfungs-Montage der Gepäckraum-Innenverkleidung bzw. zugehörigen Elemente. Mit steigenden Qualitätsansprüchen der Fahrzeugnutzer werden nämlich auch die Bereiche der Türsäulen und der optische Eindruck des Gepäckraumes zunehmend wichtig für den beim potenziellen Käufer oder Benutzer entstehenden Qualitätseindruck eines Pkw.

In bevorzugter konstruktiver Ausführung ist die Rahmenkonstruktion im wesentlichen durch Kastenprofile mit rechteckigem Profilquerschnitt, wahlweise unter Einbeziehung eines oder mehrerer im wesentlichen plattenförmiger Module, gebildet. Diese Art des Aufbaus folgt bekannten Vorbildern, gewinnt aber durch den sämtliche Module einbeziehenden integralen Konstruktionsvorgang eine neue Qualität. Besondere Aufmerksamkeit ist dabei den Anschlussstellen der einzelnen Module an benachbarte, separierbare Module zu schenken. Letztere haben ggf. (wie etwa in bevorzugter Ausführung das Cockpit-Modul) einen in sich geschlossenen Sub-Rahmen aus Kastenprofilen, oder sie sind plattenartig, mit geeigneten Anschlüssen (etwa Schraubverbindungen) an benachbarte Kastenprofile oder Platten, ausgeführt.

Vorteile und Zweckmäßigkeiten der Erfindung ergeben sich im übrigen aus der nachfolgenden Beschreibung eines bevorzugten Ausführungsbeispiels anhand der Figuren. Von diesen zeigen:
- Fig. 1: eine perspektivische Darstellung eines als Teil eines integralen Montage- und Abstimmbockes konstruierten Cockpit-Moduls mit aufgesetztem Armaturentafel-Grundkörper,
- Fig. 2: eine perspektivische Darstellung eines Gepäckraum-Moduls als weiterer Komponente des gleichen Montage- und Abstimmbockes mit eingesetzten Gepäckraum-Verkleidungsteilen,
- Fig. 3: eine perspektivische Darstellung mehrerer zusammengefügter Komponenten des Abstimm- und Montagebockes, nämlich des Cockpit-Moduls, und der Tragwerke von Türverkleidungs-Modulen und eines Gepäckraum-Moduls,
- Fig. 4: eine perspektivische Darstellung eines Dachhimmel-Moduls, welches ebenfalls einen Teil des integralen Montage- und Abstimmbockes bildet, und
- Fig. 5A und 5B: eine Außen- bzw. Innenansicht eines Türverkleidungs-Moduls, welches ebenfalls eine Komponente des integralen Montage- und Abstimmbockes darstellt.

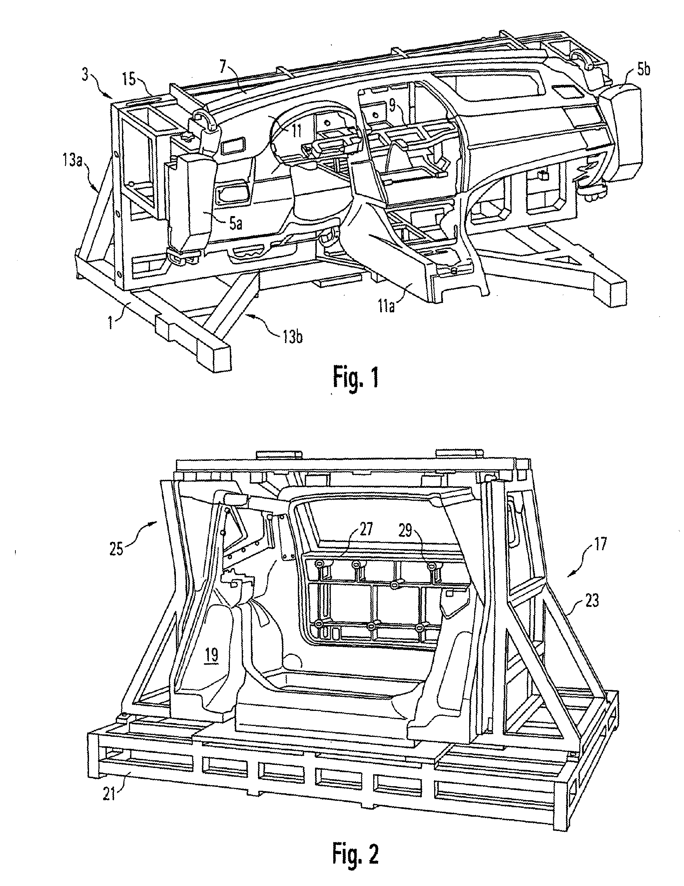

Fig. 1 zeigt einen aus Kastenprofilen 1 mit unterschiedlichen Querschnitten verschweißten Abstimmbock 3 für die Instrumententafel eines Pkw (nachfolgend auch bezeichnet als Cockpit-Modul), welcher als Teil eines integralen, in dieser Figur nicht zu erkennenden Montage- und Abstimmbockes konstruiert ist. Seitenwangen 5a, 5b bilden in gewissem Sinne Anschlussstücke zu benachbarten (in dieser Figur nicht dargestellten) Türverkleidungen bzw. Türverkleidungs-Modulen. Im vorderen Bereich des Cockpit-Moduls 3 sind Sub-Module 7 und 9 zu erkennen, die zur exakten Halterung eines Instrumententafel-Grundkörpers 11 an dessen Vorderkante bzw. zur Halterung von dort noch einzusetzenden (ebenfalls hier nicht dargestellten) Komponenten dienen.

Das Cockpit-Modul 3 hält hier zugleich einen an den Instrumententafel-Grundkörper 11 angeformten Mittelkonsolen-Grundkörper 11a. In dieser Figur ist auch gut zu erkennen, dass das Cockpit-Modul 3 aus den verschiedenen Kastenprofilen 1 als komplexes räumliches Tragwerk mit versteifenden Diagonalverstrebungen 13a, 13b im vorderen bzw. unteren Bereich gebildet ist und im übrigen eine Art Frontplatte 15 einschließt, an der auch die bereits erwähnten Sub-Module 7 und 9 angebracht sind.

Fig. 2 zeigt einen in ähnlicher Weise als räumliches Tragwerk aufgebauten Abstimmbock 17 für die Gepäckraumausstattung eines Pkw (hier auch bezeichnet als Gepäckraum-Modul), mit einem eingesetzten Gepäckraum-Formteil 19 und aufgebaut auf einer Grundplatte 21. Die Grundplatte 21 ist aus gedoppelten, rechtwinklig zusammengefügten Kastenprofilen gefertigt und Teil des (auch hier nicht insgesamt dargestellten) Montage- und Abstimmbockes.

Auch das Gepäckraum-Modul ist im unteren Bereich durch schräg gestellte Verstrebungen 23 lateral versteift, und im oberen Bereich 25 sorgt eine geneigte Stellung der Kastenprofile für eine grundsätzliche Anpassung an die Gestalt der Karosserie-Außenhaut. Im Bereich einer Gepäckraumklappe ist ein aus Profilen kleineren Querschnitts aufgebautes Klappen-Submodul 27 vorgesehen, und hier sind auch gut mehrere Aufnahmeelemente 29 zur Halterung einer Klappen-Innenverkleidung zu erkennen.

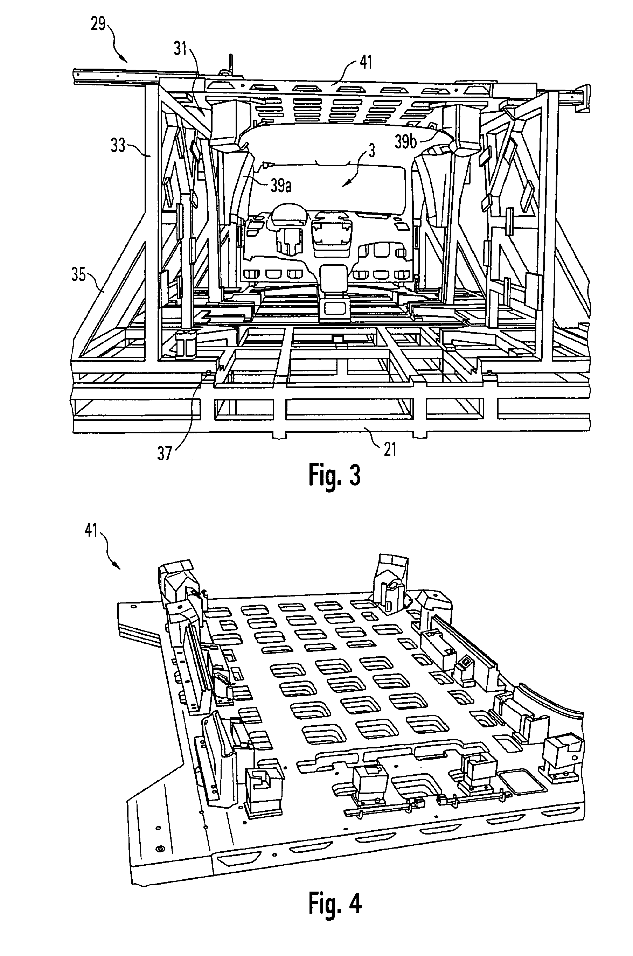

Fig. 3 zeigt den größeren Teil des Gesamtaufbaus eines Montage- und Abstimmbockes 29, dem die in Fig. 1 und 2 gezeigten und oben erläuterten Module zuzuordnen sind. In der Figur ist das Cockpit-Modul 3 im Hintergrund zu erkennen. Im Vordergrund sind die auf die bereits oben erwähnte Grundplatte 21 aufgebauten Tragwerke 31, 33 eines vorderen und hinteren Türverkleidungs- bzw. Türverkleidungs-/Gepäckraum-Moduls zu erkennen. Auch diese Tragwerke sind, auf die bereits weiter oben beschriebene Weise, aus Kastenprofilen mit im unteren Bereich angeordneten geneigten Verstrebungen 35 ausgeführt. In dieser Figur sind gut die Anschlusspunkte (Verschraubungen) 37 mit der Grundplatte 21 zu erkennen. Weiterhin sind hier in die vordere Rahmenkonstruktion 31 eingefügte Säulenverkleidungs-Halter 39a, 39b und ein aufgesetztes, plattenförmiges Dachhimmel-Modul 41 zu erkennen.

Fig. 4 zeigt in perspektivischer Darstellung dieses letztgenannte Dachhimmel-Modul (auch bezeichnet als Dachhimmel-Prüfvorrichtung) 41 genauer. Gut zu erkennen ist die massive Plattenkonstruktion, deren Gewicht durch eine Vielzahl von Ausnehmungen reduziert wird, welche im übrigen zur durchgestreckten Verschraubung diverser (hier nicht gesondert bezeichneter) Anschlussstücke zu Montage- und Prüfzwecken dienen.

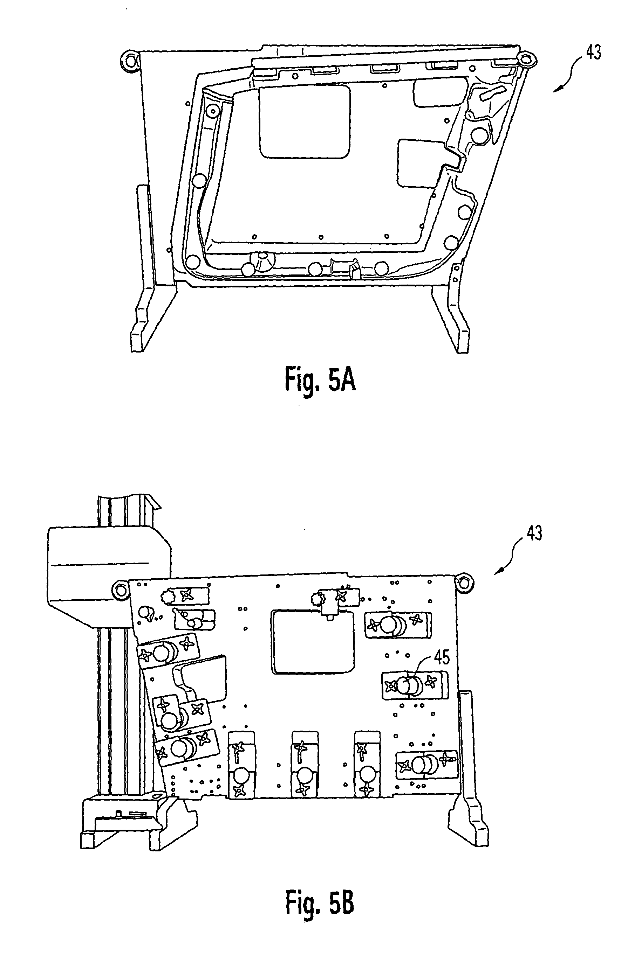

Fig. 5A und 5B zeigen eine ebenfalls plattenförmig aufgebaute Türverkleidungs-Prüfvorrichtung (auch bezeichnet als Türverkleidungs-Modul) 43, auf die im gezeigten Zustand eine Mehrzahl von im wesentlichen gleichartigen Anschlusselementen 45 zur Montage von (hier nicht zu erkennenden) Türverkleidungselementen aufgesetzt ist. Das Türverkleidungs-Modul wird im Gebrauchszustand zum Abgleich der Türverkleidungsteile mit den übrigen Innenausstattungselementen in die in Fig. 3 dargestellte Tragkonstruktion 31 des Montage- und Abstimmbockes 29 eingeschraubt.

Die Ausführung der Erfindung ist nicht auf dieses Ausführungsbeispiel beschränkt, sondern ebenso in einer Vielzahl von Abwandlungen möglich, die im Rahmen fachgemäßen Handelns liegen. Insbesondere betreffen solche Abwandlungen die konkrete Profilgestalt der Tragkonstruktion sowie der plattenförmigen Prüfvorrichtung für den Dachhimmel und die Türverkleidung und den speziellen Aufbau des Cockpit-Moduls.

## Patentansprüche

1. Montage- und Abstimmbock zur Passgenauigkeitsprüfung einer Fahrzeug-Innenausstattung, insbesondere einer Pkw-Innenausstattung, mit einer Mehrzahl steifer Rahmenteile, die fest oder lösbar miteinander verbunden und zur Anbringung von verschiedenen Innenausstattungsteilen eines Fahrzeuges an der Innenseite einer Rahmenkonstruktion ausgebildet sind,
**dadurch gekennzeichnet, dass**
die Rahmenkonstruktion zur Anbringung einer im wesentlichen vollständigen Innenausstattung ausgebildet und durch Vorsehen lösbarer Befestigungen zwischen Komponenten der Rahmenkonstruktion derart modular ausgeführt ist, dass jeweils ein Modul dem Innenausstattungs-Lieferumfang eines Zulieferers zugeordnet ist und diese Module als jeweils in sich steife Einheiten aus der Rahmenkonstruktion herauslösbar sind.

2. Montage- und Abstimmbock nach Anspruch 1,
**dadurch gekennzeichnet, dass**
die Rahmenkonstruktion mindestens ein Cockpit-Modul, ein Türverkleidungs-Modul und ein Dachhimmel-Modul umfasst.

3. Montage- und Abstimmbock nach Anspruch 2,
**dadurch gekennzeichnet, dass**
die Rahmenkonstruktion ferner ein vom Türverkleidungs-Modul separierbares Säulenverkleidungs-Modul und/oder ein Gepäckraum-Modul umfasst.

4. Montage- und Abstimmbock nach Anspruch 2 oder 3,
**dadurch gekennzeichnet, dass**
das Cockpit-Modul zur Montage und Prüfung einer Mittelkonsolen-Ausstattung zusammen mit der Cockpit-Ausstattung ausgebildet ist.

5. Montage- und Abstimmbock nach einem der vorangehenden Ansprüche, **gekennzeichnet durch**
die Ausbildung zur visuellen und dimensionalen Beurteilung des Fugenbildes des gesamten Fahrzeug-Innenraumes.

6. Montage- und Abstimmbock nach einem der vorangehenden Ansprüche,
**dadurch gekennzeichnet, dass**
die Rahmenkonstruktion im wesentlichen durch Kastenprofile mit rechteckigem Profilquerschnitt, wahlweise unter Einbeziehung eines oder mehrerer im wesentlichen plattenförmiger Module, gebildet ist.

7. Montage- und Abstimmbock nach Anspruch 6,
**dadurch gekennzeichnet, dass**
das Türverkleidungs-Modul und/oder Dachhimmel-Modul im wesentlichen plattenförmig ausgebildet ist.

8. Montage- und Abstimmbock nach Anspruch 6 oder 7,
**dadurch gekennzeichnet, dass**
das Cockpit-Modul einen Sub-Rahmen aus Kastenprofilen aufweist.

9. Verfahren zur Vormontage einer Innenausstattung eines Fahrzeuges, insbesondere eines Pkw, mindestens zum Zwecke der Prüfung der Passfähigkeit ihrer Teile, unter Einsatz einer Rahmenkonstruktion mit fest oder lösbar miteinander verbundenen Rahmenteilen, die zur innenseitigen Anbringung von verschiedenen Innenausstattungsteilen ausgebildet sind,
**dadurch gekennzeichnet, dass**
- für die Vormontage im wesentlichen sämtlicher Komponenten der Innenausstattung in einem einheitlichen Konstruktionsvorgang eine zusammenhängende Rahmenkonstruktion bereitgestellt wird, welche einen modularen Aufbau entsprechend dem Lieferumfang von Zulieferern der Komponenten hat,
- dem Lieferumfang entsprechende Module der Rahmenkonstruktion im gleichen Konstruktionsvorgang zusätzlich separat bereitgestellt werden,
- die Komponenten der Innenausstattung der einzelnen Zulieferer jeweils an den separaten Modulen vormontiert werden und
- im Bedarfsfall eine gesamte Innenausstattung an der zusammenhängenden Rahmenkonstruktion vormontiert wird.

10. Verfahren nach Anspruch 9,
**dadurch gekennzeichnet, dass**
mindestens ein Teil der Module der Rahmenkonstruktion nach deren Erstellung im montierten Zustand jeweils zu einem Zulieferer transportiert wird.
